# EUROPEAN PATENT APPLICATION

(11) **EP 3 477 429 A1**
(43) Date of publication of application: **01.05.2019**
(21) Application number: 17199092.2
(22) Date of filing: 30.10.2017
(51) Int. Cl.: G06F 3/01, G02B 27/01

(54) **SCREEN LOCK FOR AN OPTICAL SEE THROUGH HMD**

(71) Applicant: Vestel Elektronik Sanayi ve Ticaret A.S., 45030 Manisa (TR)
(72) Inventor: KIRISKEN, Barbaros, 45030 Manisa (TR)
(74) Representative: Ascherl, Andreas

(57) **Abstract**

The present invention refers to a system for screen unlocking or locking for a screen device (101) by looking to a specific kinds of objects related with each other according to the present invention preferably comprising a screen device (101) that includes a camera (103), a display and a microcontroller (104). The screen device (101) can be configured to provide one or more predefined objects (102) along with coverage area in a real environment by a user (202) for locking or unlocking screen of the screen device (101). The camera or cameras (103) can be configured for capturing objects (105) in a field of vision of the user (202) and for transferring the captured object images to the microcontroller (104) for processing. The micro controller can be configured for receiving and processing the captured images with the predefined objects (102) for locking or unlocking the screen of the screen device (101).

## Description

This invention refers to a system for screen unlocking or locking for a screen device by looking to specific kind of objects related with each other according to claim 1 and a method according to claim 9.

### Background of the Invention

Screen lock mechanism for mobile phones is different and implementing the same in the AR/VR systems (HMD - head mounted display) is difficult. Hence, the AR/VR systems (HMD) have limited hand usage. Thus there is a need of effective screen lock system.

Prior art document US 2017/0115736 A1 discloses a photo based unlocking device. Specifically, this reference discloses a method of unlocking a computing device such as HMD. In particular, an HMD may display an image, which could be a stock image or an image provided by the user. A user may then use a combination of head movements and gestures on a touchpad to enter an unlock pattern that is based on features in the image. Method of unlocking a computing device is based on predetermined unlock pattern, wherein the predetermined unlock pattern comprises a predetermined sequence of two or more locations in the image. On the basis of head movement or gestures as input data, it unlocks the device if it matches the predetermined unlock pattern.

Another prior art US8,988,350 discloses the method of allowing the access to digital resource by user. It allows the access on the basis of predetermined gazing characteristics like a particular sequence of eye motions, gazing at a particular location in a user's environment and user is allowed to access a digital resource when the user attribute is associated with a permission to access the digital resource. Method described in patent includes displaying a digital image with a computing device. A user is instructed to answer a query about the digital image. A user's eye-tracking data is received for a period that the user views digital image. The user's eye-tracking data is compared with one or more baseline datasets. A file or a service is provided to the user when the user's eye-tracking data substantially matches the one or more baseline datasets. Optionally, a user's bio response data can be received for the period that the user views the digital image. The user's eye-tracking data and the user's bio response data can be compared with the one or more baseline datasets. The file or the service can be provided to the user when the user's eye-tracking data and the user's bio response data substantially matches the one or more baseline datasets.

Further, prior art US20130283212 relates to method for unlocking touch screen mobile phone and touch screen mobile phone. Particularly, the prior art provides a method for unlocking a touch screen mobile phone and the touch screen mobile phone. When locking a screen of the touch screen mobile phone, one or more application icons generated according to a preset policy are displayed on a lock screen interface. After one application icon is selected and used for unlocking, an application interface corresponding to the selected application icon is directly entered.

The subject-matter of prior art documnets requires a predetermined image to be loaded in the system and requires a gesture or eye movement of the user for unlocking the screen. The user has to provide predetermined image and this leads to less security to the device. Further, the methods for processing is very complex and confusion may occur while locking or unlocking the screen. In some other prior art, the method allows the user to unlock the screen by allowing the user to open an application that is present on the locked screen. In such case the security level can be breached by any person.

### Object of the Invention

it is therefore the object of the present invention to provide a system, in particular screen unlocking or locking for a screen device by looking specific kind of objects related with each other, and a method that has a better security and is simple compared to the known systems and methods.

### Description of the Invention

The before mentioned object is solved by a system for screen unlocking or locking for screen device by looking to specific kinds of objects related with each other according to claim 1. The system for screen unlocking or locking for a screen device by looking specific kind of objects related with each other according to the present invention preferably comprises a screen device that includes a camera, a display and a microcontroller. The screen device can be configured to view one or more predefined objects along with the coverage area or object region in a real environment. The camera can be configured for capturing objects in a field of vision of the user and for transferring the captured objects images to the microcontroller for processing. The micro controller can be configured for receiving and processing the captured images with the predefined objects for locking or unlocking the screen of the screen device.

This solution is beneficial since such a system has a higher security level and does not require hand usage. Also according to the invention a screen lock for an optical see through head mounted display can be provided.

Further preferred embodiments are subject-matter of dependent claims and/or of the following specification parts.

According to a preferred embodiment of the present invention the micro controller can be configured for receiving and processing the captured images with the predefined objects in a sequence for locking or unlocking screen of the screen device to increase security.

This feature is beneficial since the security level can be increased, if the predefined objects have to be viewed in a sequence. The sequence is related to size, relation between objects, shape, usage and so on.

According to a further embodiment of the present invention the processing of the captured images can be performed using artificial intelligence (AI) or deep learning techniques by defining areas or areas that are covered by the objects on real environment in a field of vision (FOV) of the user. Further, the screen device can get locked or unlocked, when the user views a correct combination or similar area that is covered by the objects on real environment in a field of vision (FOV) of the user.

According to another embodiment of the present invention the micro controller can be configured for creating similar virtual objects if the set of predefined real objects are not available in the environment. The screen device includes Augmented Reality (AR) system, Virtual Reality (VR) systems, an optical see through HMD, mobile phones, tablets, ipads, and smartphones. The predefined objects are any kind of objects that includes home furniture, home décor items, electronic appliances, character's postures and so on.

The before mentioned object is also solved by a method for screen unlocking or locking for a screen device by looking specific kind of objects related with each other according to claim 9. Said method preferably comprises the steps: allowing a user to provide one or more predefined objects, capturing objects in a field of vision of the user, transferring the captured objects images to a microcontroller for processing, receiving the captured images with the predefined objects, processing the captured images with the predefined objects using artificial intelligence (Al) or deep learning techniques by defining areas or areas that are covered by the objects on real environment in a field of vision (FOV) of the user,and obtaining a correct combination or similar area that is covered by the objects on real environment in a field of vision (FOV) of the user for locking or unlocking the screen device.

The before mentioned object is also solved by a method for screen unlocking or locking for a screen device by looking to specific kinds of objects related with each other according to claim 9. Said method preferably further comprising the steps of: creating similar virtual objects if the set of predefined real objects are not available in the environment, and receiving and processing the captured images with the predefined objects in a sequence for locking or unlocking the screen of the screen device to increase security.

Further benefits, goals and features of the present invention will be described by the following specification of the attached figures, in which components of the invention are exemplarily illustrated. Components of the devices and method according to the invention, which match at least essentially with respect to their function can be marked with the same reference sign, wherein such components do not have to be marked or described in all figures.

The invention is just exemplarily described with respect to the attached figures in the following.

### Brief Description of the Drawings

- Fig. 1: illustrates a general block diagram of a system for screen unlocking or locking for a screen device by looking to specific kinds of objects related with each other according to the present invention;
- Fig. 2: illustrates an exemplary model for screen unlocking/ locking system a according to the present invention;
- Fig. 3: illustrates an exemplary model for object selection in user FOV according to the present invention; and
- Fig. 4: illustrates an exemplary model for providing additional security using the system according to the present invention.

### Detailed Description of the Drawings

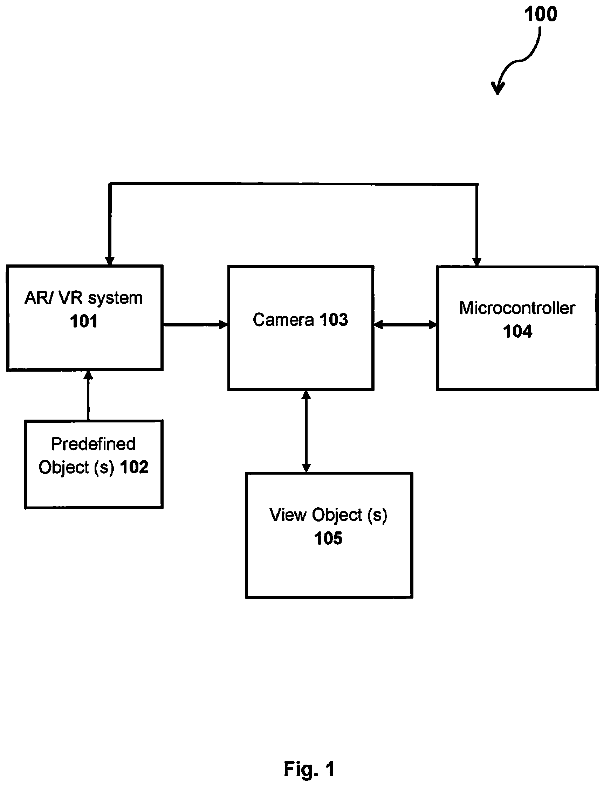

Fig. 1 illustrates a general block diagram 100 of a system for screen unlocking or locking for screen device 101 by looking specific kind of objects related with each other according to the present invention. The system for screen unlocking or locking for screen device 101 by looking specific kind of objects related with each other, preferably comprises of, a screen device 101 that includes a camera 103, a display and a microcontroller 104.

According to an embodiment, the screen device 101 can be configured to provide one or more predefined objects 102 along with coverage area in a real environment by a user 202 for locking or unlocking screen of the screen device 101. The screen devices 101 may include but not limited to Augmented Reality (AR) system, Virtual Reality (VR) systems, an optical see through HMD 201, mobile phones, tablets, ipads, and smart phone. The Head mounted display (HMD) can be either AR mode or VR mode or have both. In AR mode virtual content and real world vision are fused together. However, in VR mode only the virtual content is displayed to the user. In an AR mode HMD, the system can work in two possible modes. That it works either in optical-see-through AR or video-see-through AR. This system can work in both optical-see-through AR, video-see-through AR or VR, but most likely beneficial for optical-see-through AR. HMD may goes to stand-by mode or screen lock as very similar to smart phones, such as time delay without any usage, also there is possibility that to use eye movements and lack of eye movements with a delay. The HMD's may have either their own screen or also some models are using mobile phone as a screen. The system can be used to unlock the mobile phone provided inside the HMD system.

According to an embodiment, the camera 103 can be configured for capturing objects 105 in a field of vision of the user 202 and for transferring the captured objects images to the microcontroller 104 for processing. The micro controller can be configured for receiving and processing the captured images with the predefined objects 102 for locking or unlocking the screen of the screen device 101.The predefined objects 102 are any kind of objects that may include but are not limited to home furniture, home décor items, electronic appliances, character's postures and so on. The user can make selection by either moving their head so that moving a cursor or using a joystick or eye tracking or gesture recognition or similar. In another embodiment, the system can allow limit errors while selecting objects.

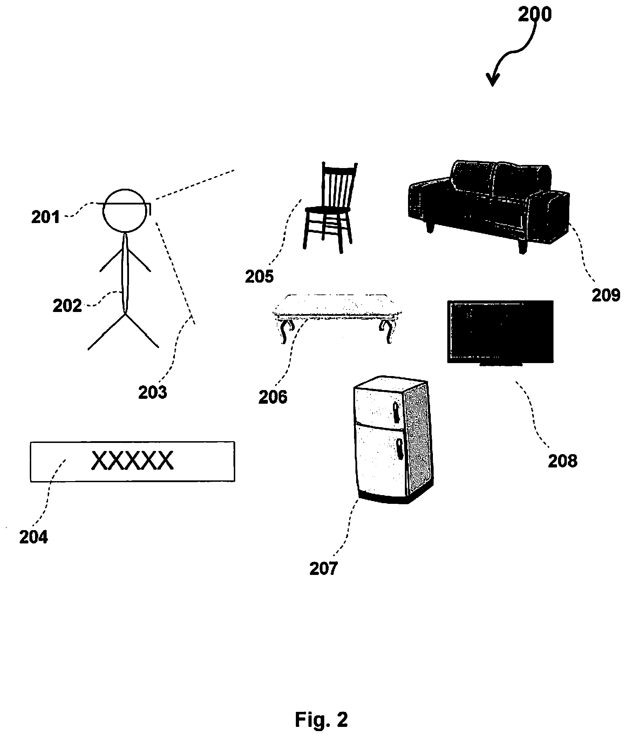

Fig. 2 illustrates an exemplary model 200 for screen unlocking/ locking system a according to the present invention. The predefined objects 102 are any kind of objects that may include but are not limited to home furniture, home decor items, electronic appliances, character's postures and so on. For example, the predefined object may be the home furniture of the same kind or usage that includes as example a chair 205, table 206, and sofa 209. Let the predefined object 1 as chair 205, the predefined object 2 as table 206, and the predefined object 3 as sofa 209. If the user 202 sets the object 1 as a predefined object, then while unlocking the screen, the user 202 has to view the object 1. At that instance, the camera 103 provided in the screen device 101 captures the image along with the area covered by the field of view 203 (FOV) of the user 202 in the real environment. The camera 103 can transfer the captured image to the micro controller for processing. The processing of the captured images performed in the micro controller using artificial intelligence (AI) or deep learning techniques by defining areas or areas that are covered by the objects on real environment in a field of vision 203 (FOV) of the user 202.As a result, if the correct object is captured then the screen can get unlocked.

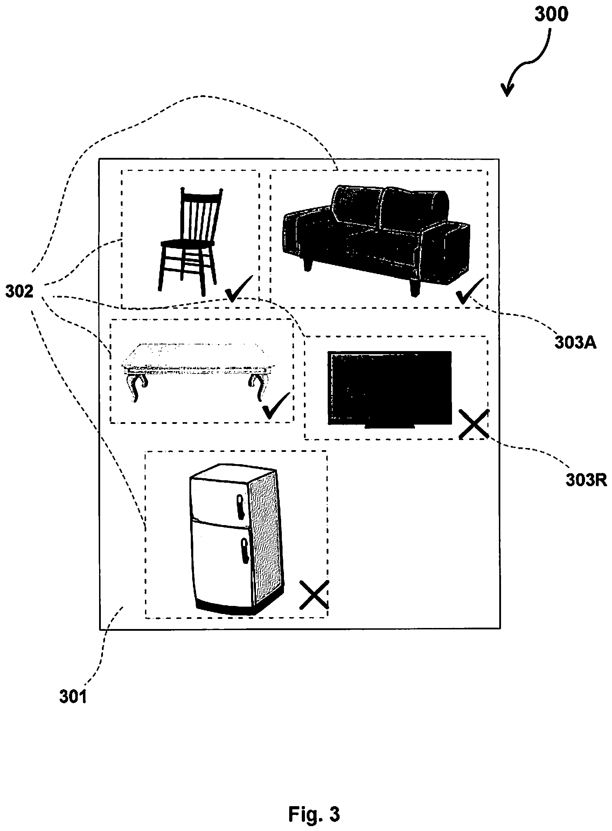

Fig. 3 illustrates an exemplary model 300 for object selection in user 202 FOV according to the present invention. Before selecting the object, the user 202 is allowed to provide or set one or more predefined objects 102 in the screen device 101. The images of the objects captured in a field of vision of the user 202 using the camera 103. The area covered or object region 302 by the object is captured. The captured objects' images are transferred to a microcontroller 104 for processing. The captured images of the predefined objects 102 are received by the microcontroller 104 for processing. The micro controller can process the captured images of the predefined objects 102 using artificial intelligence (Al) or deep learning techniques by defining areas or areas that is covered by the objects (or object region 302) on real environment in a field of vision (FOV) 301 of the user 202. When the correct combination or similar area that is covered by the objects on real environment in a field of vision (FOV) 301 of the user 202 is obtained, then the screen device 101 can be locked or unlocked.

Further, the captured images of the predefined object can get a pass concept 204 or tick mark 303A when the image is accepted, but that is not shown or visible to the user 202. Similarly, for a wrong object, a cross mark 303R is provided for the image that is also not visible to the user 202. For example for object 1 (chair) 205, the tick mark 303A is provided hence the image is accepted. For non-home furniture such as TV 208, refrigerator 207, the cross mark 303R is provided hence the image is rejected.

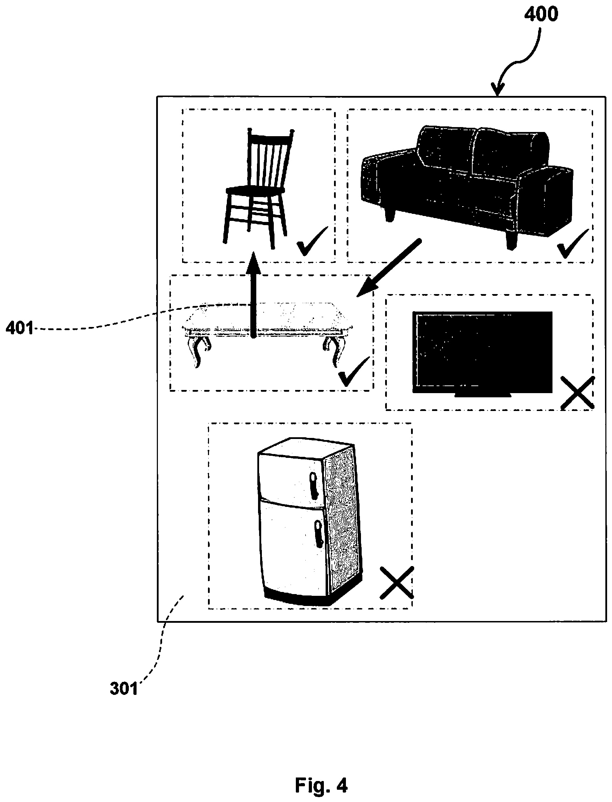

Fig. 4 illustrates an exemplary model 400 for providing additional security using the system according to the present invention. For enabling an additional security, the micro controller can be further configured for receiving and processing the captured images with the predefined objects 102 in a sequence 401 for locking or unlocking the screen of the screen device 101 to increase security. The sequence 401 relates to size, relation between objects, shape, usage and so on. For example, if the predefined objects 102 preset in the screen device 101 as larger object to smaller object then the same order has to be followed while unlocking the screen device 101. In an example, the larger object is a sofa hence it covers large area and the next larger object is a table and next is a chair. So the user 202 has to view in sequence 401 in the order of sofa, table and chair wherein the object size decreases. The sequence 401 can be varied according to the user 202 preset order.

Further, the micro controller can be further configured for creating similar virtual objects if the set of predefined real objects are not available in the environment. For example, the user 202 is in out of station then the system can create similar virtual objects if the set of predefined real object is not available in the environment.

Thus, the present invention refers to a system for screen unlocking or locking for a screen device 101 by looking to specific kinds of objects related with each other according to the present invention preferably comprising a screen device 101 that includes a camera 103, a display and a microcontroller 104. The screen device 101 can be configured to provide one or more predefined objects 102 along with coverage area in a real environment by a user 202 for locking or unlocking the screen of the screen device 101. The camera or cameras 103 can be configured for capturing objects 105 in a field of vision of the user 202 and for transferring the captured object images to the microcontroller 104 for processing. The micro controller can be configured for receiving and processing the captured images with the predefined objects 102 for locking or unlocking the screen of the screen device 101.

### List of reference numbers

- 100: general block diagram of a system
- 101: AR/ VR system or screen device
- 102: predefined object (s)
- 103: camera
- 104: microcontroller
- 105: view objects or objects in a field of vision of the user
- 200: exemplary model for screen unlocking/ lockingsystem
- 201: AR/VR glass, video-see-through or optical-see-through HMD
- 202: user
- 203: Field of view (FOV)
- 204: Pass concept, "HOME FURNITURE"
- 205: home furniture object 1, chair
- 206: home furniture object 2, table
- 207: non-home furniture, white good, refrigerator
- 208: non-home furniture, brown good, TV
- 209: home furniture object 3, sofa
- 300: exemplary model for object selection in user FOV
- 301: user FOV

- 302: object regions
- 303A: accepted, but not shown to user
- 303R: rejected, but not shown to user
- 400: an exemplary model for providing additional security using the system
- 401: user's selectionof correct objects in correctsequence or sequence

## Claims

1. A system for screen unlocking or locking for a screen device by looking to specific kinds of objects related with each other,
**characterized in that**
the system comprises
a screen device (101) that includes a camera (103), a display and a microcontroller (104),
wherein the screen device (101) is configured to provide one or more predefined objects (102) along with a coverage area in a real environment by a user (202) for locking or unlocking screen of the screen device (101),
wherein the camera (103) is configured for capturing objects (105) in a field of vision of the user (202) and for transferring the captured objects images to the microcontroller (104) for processing, and
wherein the micro controller is configured for receiving and processing the captured images with the predefined objects (102) for locking or unlocking screen of the screen device (101).

2. The system as claimed in claim 1, wherein the micro controller is configured for receiving and processing the captured images with the predefined objects (102) in a sequence (401) for locking or unlocking the screen of the screen device (101) to increase security.

3. The system as claimed in claim 2, wherein the sequence (401) relates to size, relation between objects, shape, or usage.

4. The system as claimed in claim 1, wherein the processing of the captured images performed uses artificial intelligence (AI) or deep learning techniques by defining an area or areas that is or are covered by the objects on real environment in a field of vision (FOV) (301) of the user (202), and wherein the screen device (101) gets locked or unlocked, when the user (202) views a correct combination or area that is covered by the objects on real environment in a field of vision (FOV) (301) of the user (202).

5. The system as claimed in claim 1, wherein the micro controller is configured for creating similar virtual objects if the set of predefined real object is not available in the environment.

6. The system as claimed in claim 1, wherein the screen device (101) includes Augmented Reality (AR) system, Virtual Reality (VR) systems, an optical see through HMD, mobile phones, tablets, ipads or smart phones.

7. The system as claimed in claim 1, wherein the predefined objects (102) are any kind of objects that includes home furniture, home décor items, electronic appliances, and character's postures.

8. The system as claimed in claim 1, wherein the user (202) make selection by either moving their head or using a joystick or eye tracking or gesture recognition to move a cursor.

9. A method for screen unlocking or locking for a screen device by looking to specific kind of objects related with each other comprising the step of,
allowing a user (202) to be provided with one or more predefined objects (102),
capturing objects (105) in a field of vision (301) of the user (202) by a camera,
transferring the captured objects images to a microcontroller (104) for processing,
processing the captured images of the predefined objects (102) using artificial intelligence (Al) or deep learning techniques by defining an area or areas that is or are covered by the objects on a real environment in a field of vision (FOV)(301) of the user (202), and
identifying a correct combination or area that is covered by the objects on the real environment in a field of vision (FOV) (301) of the user (202) for locking or unlocking the screen device (101).

10. The method as claimed in claim 9, wherein the method further comprising the step of creating similar virtual objects if the set of predefined real objects is not available in the environment, and
receiving and processing the captured images with the predefined objects (102) in a sequence (401) for locking or unlocking the screen of the screen device (101) to increase security.
